# EUROPEAN PATENT SPECIFICATION

(11) **EP 3 436 886 B1**
(45) Date of publication and mention of the grant of the patent: **21.10.2026**
(21) Application number: 17776336.4
(22) Date of filing: 23.03.2017
(51) Int. Cl.: G06F 1/08, G06F 9/44, G06T 15/50, G09G 5/397, G06F 11/34, A63F 13/50, A63F 13/60, G06F 9/445, G06F 11/30

(54) **REAL-TIME ADJUSTMENT OF APPLICATION-SPECIFIC OPERATING PARAMETERS FOR BACKWARDS COMPATIBILITY**
ECHTZEITANPASSUNG VON ANWENDUNGSSPEZIFISCHEN BETRIEBSPARAMETERN FÜR RÜCKWÄRTSKOMPATIBILITÄT
RÉGLAGE EN TEMPS RÉEL DE PARAMÈTRES DE FONCTIONNEMENT SPÉCIFIQUES À UNE APPLICATION POUR UNE RÉTROCOMPATIBILITÉ

(30) Priority: 30.03.2016 US 201662315345 P; 30.03.2016 US 201662315315 P; 22.03.2017 US 201715466769; 22.03.2017 US 201715466759
(43) Date of publication of application: 06.02.2019
(73) Proprietor: Sony Interactive Entertainment Inc., Tokyo 108-0075 (JP)
(72) Inventor: CERNY, Mark Evan, San Mateo, California 94404 (US); SIMPSON, David, San Mateo, California 94404 (US)
(74) Representative: Fish & Richardson P.C.
(86) International application number: PCT/US2017/023774
(87) International publication number: WO 2017/172475

(56) References cited:
- EP-A1- 2 924 564
- US-A1- 2001 033 287
- US-A1- 2005 123 032
- US-A1- 2006 281 556
- US-A1- 2007 016 895
- US-A1- 2010 218 029
- US-A1- 2014 181 487

## Description

### FIELD OF THE DISCLSOURE

Aspects of the present disclosure are related to execution of a computer application on a computer system. In particular, aspects of the present disclosure are related to a system or a method that provides backward compatibility for applications/titles designed for older versions of a computer system.

### BACKGROUND

When new computer architecture is released it is desirable for the applications written for a previous version of the architecture to run flawlessly on the new architecture. This capability is often referred to as "backwards compatibility." Implementing backwards compatibility involves emulating a target legacy device on the new host architecture so that the new architecture can execute the instructions of programs written for the legacy device. Computer architectures change over time to take advantage of technological advances in busses, clock speed, processor architecture, caching, standards, etc. When one computer architecture is replaced by a newer architecture the older architecture becomes what is called legacy architecture. Over the course of its development software applications, such as network protocols, user interfaces, audio processing, device drivers, graphics processing, messaging, word processors, spreadsheets, database programs, games, and other applications are written for a legacy architecture. Such legacy software still has value to its users even if they upgrade to a new architecture. A need therefore exists to be able to run legacy software on the new architecture.

Differences in performance of the hardware components of a new device and a legacy device can cause errors in synchronization on the new device, which may cause a legacy application to crash or produce incorrect output when running on a new device architecture. Such differences in performance can arise, e.g., from differences in hardware architecture between the new and legacy devices. It is within this context that aspects of the present disclosure arise. Previously proposed arrangements are disclosed in EP 2 924 564 A1 and US 2014/181487 A1

### BRIEF DESCRIPTION OF THE DRAWINGS

FIG. 1A is a flow diagram that illustrates derivation of application-specific operating parameters in accordance with aspects of the present disclosure.
FIG. 1B is a flow diagram that illustrates real-time adjustment of application-specific operating parameters in accordance with aspects of the present disclosure.
FIG. 2A is a block diagram illustrating an example of a central processing unit (CPU) core that may be configured to operate in a backwards compatibility mode in accordance with aspects of the present disclosure.
FIG. 2B is a block diagram illustrating an example of a possible multi-core architecture for a CPU in accordance with aspects of the present disclosure.
FIG. 3 is a block diagram of a device having a CPU configured to operate in a backwards compatibility mode in accordance with aspects of the present disclosure.

### INTRODUCTION

To address problems that arise due to differences in hardware behavior when running a legacy application on a new device the new hardware may be tuned to run the legacy application.

During a testing stage the legacy application is run on a legacy device with legacy architecture and performance information is collected. Examples of performance information include the number of ALU instructions or memory operations per unit time, and average parallel processing hardware scheduling unit (e.g., wavefront) occupancy or lifetime. The performance information may be directly measured (ALU and memory operations) by running games and application on a legacy device and reading counters. Alternatively, performance information may be derived from reading such counters or other data output as part of the measuring process. As an example of such derivation, average wavefront occupancy and lifetime may be derived from measurements of when wavefronts start and stop. Combined performance data for a particular application, e.g., a particular video game, is referred to herein as the performance characteristics for that application. The performance characteristics determined for the application in the testing stage can be used as a baseline for running the same application on a new system to ensure backwards compatibility.

The performance of an application on a new device may be closely matched to the performance of that same application on the legacy device by tuning the operating parameters of the new device. Examples of operating parameters include, among other things, the clock frequencies of the new device, the number of available general purpose registers (GPRs), instruction launch rates, and the like. The application may be run repeatedly on the new system while tuning its operating parameters to adjust the application-specific performance characteristics. After a sufficient number of tests on the new system one can analyze how the performance characteristics of the application on the new system converge as the operating parameters change. A new set of operating parameters can be created based on the convergence analysis. This process may be repeated until the operating parameters are set optimally for the application on the new system. To further optimize, one can adjust the execution of the new hardware to see if the application can be run faster on the new hardware without causing it to fail.

### DETAILED DESCRIPTION

### Application-Specific Performance Characteristic Determination

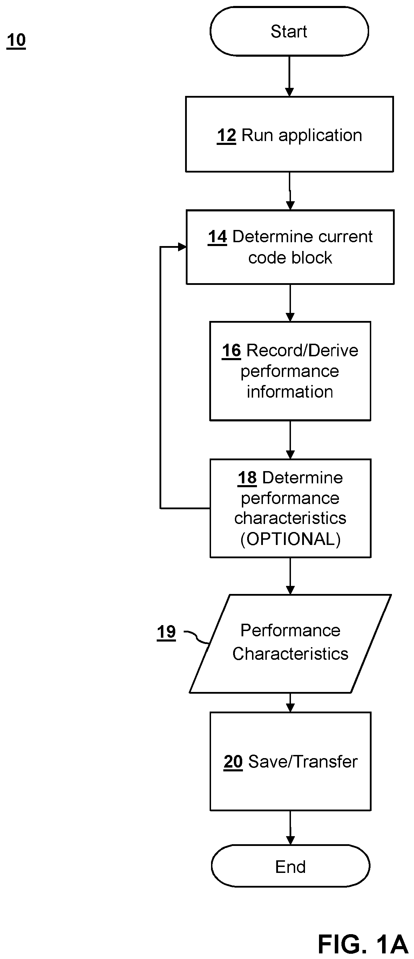

FIG. 1A shows a method 10 for deriving application-specific operating parameters during a testing phase in which the application runs on the legacy system. The application is run on a legacy system 12 and for each code block 14, performance information is recorded or derived 16. Running the application may include, e.g., loading a capture and letting it run without input or playing through a specific area of a game. Performance information includes Key Performance Metrics and Other Performance Information. Key Performance Metrics refers to that subset of performance information that is most important when the application is run on the new system. A Key Performance Metric is one that must be met when the application is run on the new hardware. Examples of Key Performance Metrics include, but are not limited to frames per second (e.g., in the case of video intensive applications, such as video games) and instructions per cycle (IPC) binned to a program counter (PC) range.

Other Performance Information includes, but is not limited to PC block residence, number of arithmetic logic unit (ALU) instructions issued per unit time (CPU and GPU), number of memory operations issued per unit time (CPU and GPU), average parallel processing hardware scheduling unit (e.g., wavefront, warp, or vector width) occupancy per unit time, average parallel processing hardware scheduling unit lifetime, average latency for memory operations, count of pixels output to render targets per unit time, and total cycles active during a frame (ALU count is a specific example of this).

Performance information may include values that are directly read from counters or derived from such values and other information, such as counting clock cycles between events during program execution. The performance information is further analyzed at 18 and selected performance information is combined to determine a set of performance characteristics 19, which may then be saved or transferred 20.

Certain performance information values may be stored in dedicated processor registers that keep track of information related to execution of the application. Examples of such values include, but are not limited to counter values, such as the program counter and counters for memory cycles, arithmetic logic unit (ALU) cycles, and pixels, among others. The program counter (PC), also called the instruction pointer (IP) in Intel x86 and Itanium microprocessors, and sometimes called the instruction address register (IAR), or the instruction counter, is a processor register that indicates where a computer is in its program sequence.

As noted above, certain other performance information, such as average parallel processing hardware scheduling unit (e.g., wavefront, warp, or vector width) occupancy per unit time, average parallel processing hardware scheduling unit lifetime, average latency for memory operations, count of pixels output to render targets per unit time may be derived indirectly. By way of example, and not by way of limitation, the number of instructions per cycle (IPC) may be derived by dividing a difference between initial and final program counter values by a number of clock cycles between the initial and final program counter values. Also, determining the average parallel processing hardware scheduling unit lifetime may involve detecting the launch and completion of such scheduling units and counting clock cycles therebetween. Similarly, determining average occupancy per unit time of parallel processing hardware scheduling units is a matter of recording launch and completion during a given window of time and determining how many, on average, are executing at any given time within that window of time.

The term "parallel processing scheduling unit" is used herein as a generic term to cover several different terms used by manufacturers of different processor hardware to describe the concept of the smallest executable unit for parallel processing of code. For example, in the context of GPUs, parallel processing threads are bunched in what is sometimes called a "warp" (for NVIDIA hardware) or a "wavefront" (for AMD hardware) as the most basic unit of scheduling, the difference primarily being the number of threads that are grouped together. Other equivalent definitions include: "the smallest executable unit code can operate upon" or "unit of processing by a single instruction over all of the threads in it at the same time" or "minimum size of the data processed in SIMD fashion". For CPU hardware the concept of a most basic level of parallelism is often called a "vector width" (for example when using the SSE instructions on Intel and AMD processors). For the sake of simplicity, the term "wavefront" will be used herein as a substitute for "parallel processing scheduling unit". All the threads in a wavefront execute the same instruction in lock-step, the only difference being the data operated on by that instruction.

Other operating information can be derived from operating register values in a number of different ways. For example, IPC may be derived by sampling the counter containing the total number of instructions that have been executed as the program executes. By way of example, this counter may be sampled every N cycles. The IPC value may be derived from an initial total instructions executed value (TIEᵢ) and a subsequent value N cycles later (TIE_{i+N}) from (TIE_{i+N}-TIEᵢ)/N. As a practical matter, the IPC value for a given section of an application (e.g., block of code) may be binned by the PC range for that particular section. Furthermore, each PC range within an application may therefore have different potential behavior and correspondingly different IPC values. It is therefore useful to associate IPC values with identified sections of program code, e.g., by code block number.

PC block residence, which refers to the block of application code currently being executed, may be more relevant for the CPU than the GPU since the GPU typically runs multiple pieces of code simultaneously. PC block residence may be derived by sampling the PC every N cycles and counting the number of times the sample falls in the same block of code.

Frequency of issuing ALU or Memory Operations may be derived by detecting the issuance of such operations and counting the number of such operations issued over a given window of time. Similarly, the count of pixels output to render targets per unit time may be derived by counting pixels output over a given window of time. Latencies, such as cache latency or memory operation latency may be derived by detecting issuance and completion of cache read/write and/or memory access instructions and counting clock cycles between issuance and completion.

Recording/deriving performance information at **16** may include detecting busy waits. Busy waiting is typically implemented as a short loop. From a counter perspective this will look like the PC is staying in a very small range (and repeating) and there will be some type of memory read or IO read operation that happens every time through the loop. It is possible IPC could be high because of the loop, but more practically IPC will likely be low as the time in the loop will be dominated by waiting for the results of the memory or IO operation to return. Busy waits may be detected by looking for times when the PC stays in a very small range and the time is dominated by waiting for memory or IO operations to complete. The busy waits tend to skew the IPC and other performance information measurements. Since the time spent on busy waits is unpredictable, measurements taken while busy waiting may be removed from the performance information as part of the process of determining the performance characteristics at **18.** By doing so, the subsequent process of adjusting the operating parameters won't be influenced by the presence of busy waits.

Analyzing recorded or derived performance information at **18** generally involves narrowing down the performance information to a useful set of performance characteristics **19** that generally characterizes the behavior of the application during execution. The performance characteristics **19** include, but are not limited to one or more key performance metrics and other performance information that is useful for later determination of operating parameters, as discussed below.

The performance characteristic determination stage **18** may determine which performance information values are useful for tuning operating parameters, e.g., by determining correlations between changes in key performance information values and operating parameters through multivariate analysis as many different performance information values may change in response to changes in a given operating parameter.

### Parameter Adjustment Process

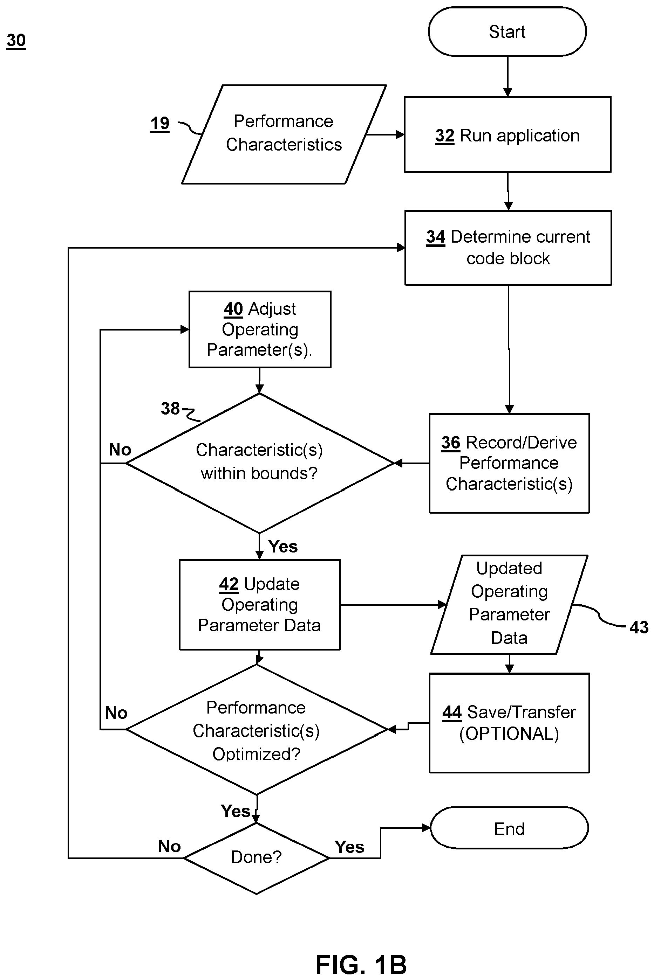

FIG. 1B describes a method **30** for adjusting execution of a legacy application to optimize the operating parameters when the application runs on the new system. The new system may use the performance characteristics **19** to adjust one or more operating parameters in real time when running the legacy application **(32).** For each code block **34** performance information is derived **36,** e.g., as discussed above. If one or more key performance metrics are not within bounds at **38,** one or more operating parameters may be iteratively adjusted **40** until they are. Once the key performance metrics are within bounds at **38,** operating parameters may be updated **42** and optimized by further adjustment **40.** Updated/optimized operating parameter data **43** may be saved or transferred **44.**

The term "operating parameters" generally refers to aspects of the execution of application on the new system that can be adjusted to affect performance information including key performance metrics. Examples of operating parameters may include, but are not limited to: clock frequencies, e.g., for CPU, GPU, or memory, launch rate of instructions, launch rate of ALU and/or memory operations, resources e.g., general purpose registers (GPRs), wavefront slots, read and store queue sizes, etc., feature disablement, cache parameters (e.g., cache size, number of ways, number of banks, etc.), wavefront launch rate, pixel output rate from render backends, memory operation stalling.

Algorithm matching refers to performing certain operations on the new system using algorithms from the legacy system architecture instead of new and improved algorithms written for the new system architecture. An example of such algorithm matching would be to use the branch predictor for the legacy system to perform branch prediction on the new system. In this example, the algorithm matching parameters would include parameters used in the legacy algorithm.

Other operating parameters may also include parameters related to resource restriction (e.g., as described in U.S. Patent Application number 14/810,361, filed July 27, 2015), and parameters related to algorithm matching, feature disablement, and matching latency or throughput (e.g., as described in U.S. Patent Application number 14/810,334, filed July 27, 2015).

Adjustment of operating parameters at **40** can be simple, e.g., setting the number of general purpose registers (GPRs) on the new hardware to the same number as the legacy hardware.

Alternatively the new hardware may use a legacy algorithm for certain operations or features of the new hardware may be disabled for operation of the legacy application. The execution may be adjusted to match a latency on the new system to a legacy hardware latency.

Adjustment of operating parameters can be more complex due to architectural differences between the legacy and new hardware. In some cases more resources may be allocated on the new hardware than the original hardware, e.g., by setting a slightly larger number of GPRs.

Table I below lists some non-limiting examples of application-specific operating parameters, how to derive them, and how to adjust them.

**TABLE I**

| Performance Information | How to Measure/Derive | How to vary by Adjusting Operating Parameter |
|---|---|---|
| Instructions per Cycle (IPC) | Measure all instructions issued with counter during frame (CPU and GPU) | Adjust instruction launch rate (need to do in HW) |
| Frequency of issuing ALU Operations | Measure ALU cycles with counter during frame (CPU and GPU) | Don't allow ALU Operation every N cycles (need to do in HW) |
| Frequency of issuing Memory Operations | Measure Memory cycles with counter during frame (CPU and GPU) | Don't allow Memory Operation every N cycles (need to do in HW) |
| Average Wavefront Occupancy per unit time | Can sample this with a counter or replay capture and look at when wavefronts start and stop. (GPU) | Selectively Allocate GPRs (could do in SW) or throttle wavefront launch rate (need to do in HW) |
| Average Wavefront Lifetime | Replay capture and look at when wavefronts start and stop. (GPU) | Selectively Allocate GPRs (could do in SW) or throttle wavefront launch rate (need to do in HW) |
| Pixels output to render targets per unit time | Look at pixel count per unit time w/existing counter. (GPU) | Throttle output rate (# pixels) from render backends (these write pixels out to render targets at the bottom of the graphics pipeline). (need to do in HW) |
| Average Memory operation latency | Determine when a memory instruction is issued and when it's executed and count clock cycles in between (CPU and GPU) | Stall memory operations from finishing (need to do in HW) or run the clock at a different rate (can do in SW). |
| PC block residence | Read Program Counter (CPU) | Useful information when adjusting operating parameters if operating parameter values are strongly correlated to block residence |

The resulting updated operating parameters **43** may include a lower bound for each item of application-specific performance information above where the performance metrics of the legacy application running on the legacy hardware are consistently met. With further testing on the new hardware, each item of application-specific performance information may further include an upper bound, above which the legacy application no longer functions properly or the key performance metrics of the legacy application are no longer met on the new system. The application-specific performance information may correspond to the information in Table II below.

**TABLE II**

| Code Block | Performance Information | Min | Max |
|---|---|---|---|
| CB1 | Instructions per Cycle (IPC) | IPC1ₘᵢₙ | IPC1ₘₐₓ |
| CB1 | Frequency of issuing ALU Operations | AOF1ₘᵢₙ | AOF1ₘₐₓ |
| CB1 | Frequency of issuing Memory Operations | MOF1ₘᵢₙ | MOF1ₘₐₓ |
| CB1 | Average Wavefront Occupancy per unit time | AWO1ₘᵢₙ | AWO1ₘₐₓ |
| CB1 | Pixels output to render targets per unit time | PORT1ₘᵢₙ | PORT1ₘₐₓ |
| CB1 | Average Memory operation latency | AML1ₘᵢₙ | AML1ₘₐₓ |
| CB1 | PC block residence | PB1ₘᵢₙ | PB1ₘₐₓ |
| CB2 | Instructions per Cycle (IPC) | IPC2ₘᵢₙ | IPC2ₘₐₓ |
| CB2 | Frequency of issuing ALU Operations | AOF2ₘᵢₙ | AOF2ₘₐₓ |
| CB2 | Frequency of issuing Memory Operations | MOF2ₘᵢₙ | MOF2ₘₐₓ |
| CB2 | Average Wavefront Occupancy per unit time | AWO2ₘᵢₙ | AWO2ₘₐₓ |
| CB2 | Pixels output to render targets per unit time | PORT2ₘᵢₙ | PORT2ₘₐₓ |
| CB2 | Average Memory operation latency | AML2ₘᵢₙ | AML2ₘₐₓ |
| CB2 | PC block residence | PB2ₘᵢₙ | PB2ₘₐₓ |

In the example shown in Table II, there is a set of upper and lower bounds for performance information for each code block in a legacy program. This information may be used in subsequent operation of the legacy game on the new hardware. Such subsequent operation may proceed as described in FIG. 1B with the new hardware adjusting execution to keep the performance information between the minimum and maximum values.

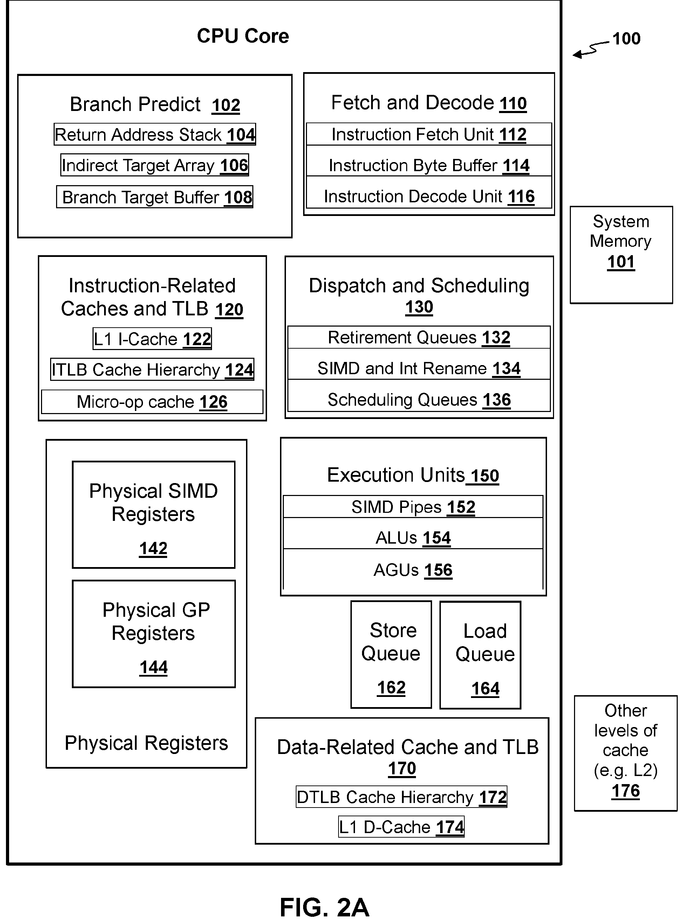

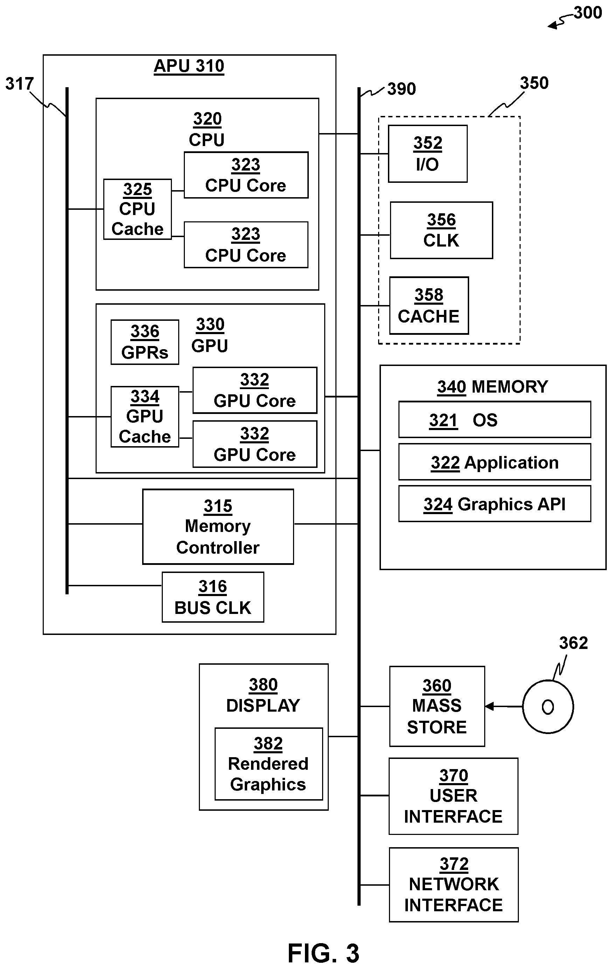

Operating parameter derivation and adjustment may be related to features of hardware shown in FIGs. 2A-2B and FIG 3. FIG. 2A depicts a generalized architecture of a CPU core 100. The CPU core **100** typically includes a branch prediction unit **102,** that attempts to predict whether a branch will be taken or not, and also attempts (in the event that the branch is taken) to predict the destination address of the branch. To the extent that these predictions are correct the efficiency of speculatively executed code will be increased; highly accurate branch prediction is therefore extremely desirable. The branch prediction unit **102** may include highly specialized sub-units such as a return address stack **104** that tracks return addresses from subroutines, an indirect target array **106** that tracks the destinations of indirect branches, and a branch target buffer **108** and its associated prediction logic that track past history of branches in order to more accurately predict their resulting addresses.

The CPU core **100** typically includes an instruction fetch and decode unit **110,** which includes an instruction fetch unit **112,** an instruction byte buffer **114,** and an instruction decode unit **116.** The CPU core **100** also typically includes a number of instruction related caches and instruction translation lookaside buffers (ITLBs) **120.** These may include an ITLB cache hierarchy **124** that caches virtual address to physical address translation information such as page table entries, page directory entries, and the like. This information is used to transform the virtual address of the instruction into a physical address so that the instruction fetch unit **112** can load the instructions from the cache hierarchy. By way of example, and not by way of limitation, the program instructions may be cached according to a cache hierarchy that includes a level 1 instruction cache (L1 I-Cache) **122** residing in the core, as well as other cache levels **176** external to the CPU core **100;** using the physical address of the instruction, these caches are first searched for the program instructions. If the instructions are not found, then they are loaded from a system memory **101.** Depending on the architecture, there may also be a micro-op cache **126** that contains the decoded instructions, as described below.

Once the program instructions have been fetched, they are typically placed in the instruction byte buffer **114** awaiting processing by the instruction fetch and decode unit **110.** Decoding can be a very complex process; it is difficult to decode multiple instructions each cycle, and there may be restrictions on instruction alignment or type of instruction that limit how many instructions may be decoded in a cycle. Decoded instructions may, depending on architecture, be placed in the micro-op cache **126** (if one is present on the new CPU) so that the decode stage can be bypassed for subsequent use of the program instructions.

Decoded instructions are typically passed to other units for dispatch and scheduling **130.** These units may use retirement queues **132** to track the status of the instructions throughout the remainder of the CPU pipeline. Also, due to the limited number of general purpose and SIMD registers available on many CPU architectures, register renaming may be performed, in which as logical (also known as architectural) registers are encountered in stream of instructions being executed, physical registers **140** are assigned to represent them. The physical registers **140** may include Single Instruction Multiple Data **(SIMD)** register banks **142** and General Purpose **(GP)** register banks **144,** which can be much larger in size than the number of logical registers available on the particular CPU architecture, and as a result the performance can be considerably increased. After register renaming **134** is performed, instructions are typically placed in scheduling queues **136,** from which a number of instructions may be selected each cycle (based on dependencies) for execution by execution units **150.**

The execution units **150** typically include SIMD pipes **152** that perform a number of parallel operations on multiple data fields contained in 128-bit or wider SIMD registers contained in the SIMD register bank **142,** arithmetic and logic units (ALUs) **154** that perform a number of logical, arithmetic, and miscellaneous operations on GPRs contained in the GP register bank **144,** and address generation units (AGUs) **156** that calculate the address from which memory should be stored or loaded. There may be multiple instances of each type of execution unit, and the instances may have differing capabilities, for example a specific SIMD pipe **152** may be able to perform floating point multiply operations but not floating point add operations.

Stores and loads are typically buffered in a store queue **162** and a load queue **164** so that many memory operations can be performed in parallel. To assist in memory operations, the CPU core **100** usually includes a number of data related caches and data translation lookaside buffers (DTLBs) **170.** A DTLB cache hierarchy **172** caches virtual address to physical address translation such as page table entries, page directory entries, and the like; this information is used to transform the virtual address of the memory operation into a physical address so that data can be stored or loaded from system memory. The data is typically cached in a level 1 data cache (L1 D-Cache) **174** residing in the core, as well as other cache levels **176** external to the core **100.**

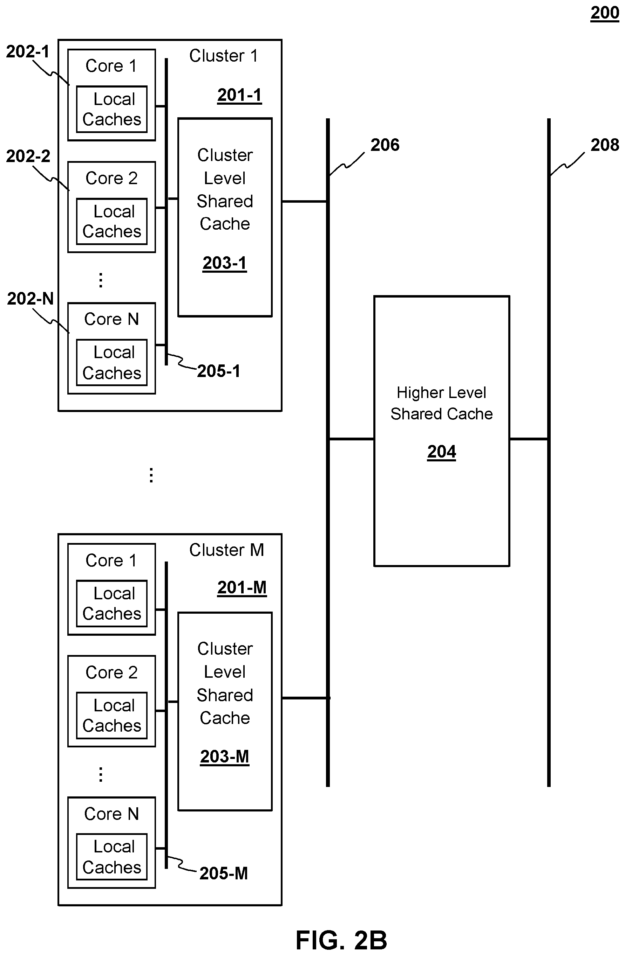

According to certain aspects of the disclosure, a CPU may include a plurality of cores. By way of example and not by way of limitation, FIG. 2B depicts an example of a possible multi-core CPU **200** that may be used in conjunction with aspects of the present disclosure. Specifically, the architecture of the CPU **200** may include M clusters **201-1...201-M,** where M is an integer greater than zero. Each cluster may have N cores **202-1,202-2...202-N,** where N is an integer greater than 1. Aspects of the present disclosure include implementations in which different clusters have different numbers of cores. Each core may include one or more corresponding dedicated local caches (e.g., L1 instruction, L1 data, or L2 caches). Each of the local caches may be dedicated to a particular corresponding core in the sense that it is not shared with any other cores. Each cluster may also include a cluster-level cache **203-1... 203-M** that may be shared between the cores in the corresponding cluster. In some implementations the cluster-level caches are not shared by cores associated with different caches. Furthermore, the CPU **200** may include one or more higher-level caches **204,** which may be shared between the clusters. To facilitate communication among the cores in a cluster, the clusters **201-1...202-M** may include corresponding local busses **205-1...205-M** coupled to each of the cores and the cluster-level cache for the cluster. Likewise, to facilitate communication among the clusters, the CPU **200** may include one or more higher-level busses **206** coupled to the clusters **201-1...201-M** and to the higher level cache **204.** In some implementations the higher-level bus or busses **206** may also be coupled to other devices, e.g., a GPU, memory, or memory controller. In still other implementations, the higher-level bus or busses **206** may be connected to a device-level bus that connects to different devices within a system. In yet other implementations, the higher level bus or busses **206** may couple the clusters **201-1...201-M** to the higher level cache **204,** and a device-level bus **208** may couple the higher level cache **204** to other devices, e.g., a GPU, memory, or memory controller. By way of example, and not by way of limitation, an implementation with such a device-level bus **208** may arise, e.g., where the higher level cache **204** is an L3 for all CPU cores, but not for GPU use.

In the CPU **200** OS processing may occur predominantly on a certain core, or a certain subset of the cores. Similarly, application-level processing may occur predominantly on a particular core or subset of the cores. Individual application threads may be designated by the application to run on a certain core, or a certain subset of the cores. As caches and buses are shared, speed of processing by a given application thread may vary depending on the processing occurring by other threads (e.g., application threads or OS threads) running in the same cluster as the given application thread. Depending on the specifics of the CPU **200,** a core may be capable of executing only one thread at once, or may be capable of executing multiple threads simultaneously ("hyperthreading"). In the case of a hyperthreaded CPU, an application may also designate which threads may be executed simultaneously with which other threads. Performance of a thread is impacted by the specific processing performed by any other threads being executed by the same core.

Turning now to FIG. 3, an illustrative example of a device **300** configured to operate in accordance with aspects of the present disclosure is depicted. According to aspects of the present disclosure, the device **300** may be an embedded system, mobile phone, personal computer, tablet computer, portable game device, workstation, game console, and the like.

The device **300** generally includes a central processor unit (CPU) **320** which may include one or more CPU cores **323** of the type depicted in FIG. 1 and discussed above. The CPU **320** may include a plurality of such cores **323** and one or more caches **325** in a configuration like that shown in the CPU **200** of FIG. 2. By way of example and not by way of limitation, the CPU **320** may be part of an accelerated processing unit (APU) **310** that includes the CPU **320,** and a graphics processing unit (GPU) **330** on a single chip. In alternative implementations, the CPU **320** and GPU **330** may be implemented as separate hardware components on separate chips. The GPU **330** may also include two or more cores **332** and two or more caches **334** and (in some implementations) one or more busses to facilitate communication among the cores and caches and other components of the system. The busses may include an internal bus or busses **317** for the APU **310,** and an external data bus **390.**

The device **300** may also include memory **340.** The memory **340** may optionally include a main memory unit that is accessible to the CPU **320** and GPU **330.** The CPU **320** and GPU **330** may each include one or more processor cores, e.g., a single core, two cores, four cores, eight cores, or more. The CPU **320** and GPU **330** may be configured to access one or more memory units using the external data bus **390,** and, in some implementations, it may be useful for the device **300** to include two or more different buses.

The memory **340** may include one or more memory units in the form of integrated circuits that provides addressable memory, e.g., RAM, DRAM, and the like. The memory may contain executable instructions configured to implement a method like the method of FIG. 5 upon execution for determining operate the device **300** in a timing testing mode when running applications originally created for execution on a legacy CPU. In addition, the memory **340** may include a dedicated graphics memory for temporarily storing graphics resources, graphics buffers, and other graphics data for a graphics rendering pipeline.

The CPU **320** may be configured to execute CPU code, which may include operating system (OS) **321** or an application **322** (e.g., a video game). The operating system may include a kernel that manages input/output (I/O) requests from software (e.g., application **322)** and translates them into data processing instructions for the CPU **320,** GPU **330** or other components of the device **300.** The OS **321** may also include firmware, which may be stored in non-volatile memory. The OS **321** may be configured to implement certain features of operating the CPU **320** in a timing testing mode, as discussed in detail below. The CPU code may include a graphics application programming interface (API) **324** for issuing draw commands or draw calls to programs implemented by the GPU **330** based on a state of the application **322.** The CPU code may also implement physics simulations and other functions. Portions of the code for one or more of the OS **321,** application **322,** or API **324** may be stored in the memory **340,** caches internal or external to the CPU or in a mass storage device accessible to the CPU **320.**

The device **300** may include a memory controller **315.** The memory controller **315** may be a digital circuit that manages the flow of data going to and from the memory **340.** By way of example and not by way of limitation, the memory controller may be an integral part of the APU **310,** as in the example depicted in FIG. 3, or may be a separate hardware component.

The device **300** may also include well-known support functions **350,** which may communicate with other components of the system, e.g., via the bus **390.** Such support functions may include, but are not limited to, input/output (I/O) elements **352,** one or more clocks **356,** which may include separate clocks for the CPU **320,** GPU **330,** and memory **340,** respectively, and one or more levels of cache **358,** which may be external to the CPU **320** and GPU **330.** The device **300** may optionally include a mass storage device **360** such as a disk drive, CD-ROM drive, flash memory, tape drive, Blu-ray drive, or the like to store programs and/or data. In one example, the mass storage device **360** may receive a computer readable medium **362** containing a legacy application originally designed to run on a system having a legacy CPU. Alternatively, the legacy application **362** (or portions thereof) may be stored in memory **340** or partly in the cache **358.**

The device **300** may also include a display unit **380** to present rendered graphics **382** prepared by the GPU **330** to a user. The device **300** may also include a user interface unit **370** to facilitate interaction between the system **100** and a user. The display unit **380** may be in the form of a flat panel display, cathode ray tube (CRT) screen, touch screen, head mounted display (HMD) or other device that can display text, numerals, graphical symbols, or images. The display **380** may display rendered graphics **382** processed in accordance with various techniques described herein. The user interface **370** may contain one or more peripherals, such as a keyboard, mouse, joystick, light pen, game controller, touch screen, and/or other device that may be used in conjunction with a graphical user interface (GUI). In certain implementations, the state of the application **322** and the underlying content of the graphics may be determined at least in part by user input through the user interface **370,** e.g., where the application **322** includes a video game or other graphics intensive application.

The device **300** may also include a network interface **372** to enable the device to communicate with other devices over a network. The network may be, e.g., a local area network (LAN), a wide area network such as the internet, a personal area network, such as a Bluetooth network or other type of network. Various ones of the components shown and described may be implemented in hardware, software, or firmware, or some combination of two or more of these.

Table III below lists some non-limiting examples of how specific hardware elements described above with respect to FIG. 2A, FIG. 2B, and FIG. 3 may be used to determine performance information and corresponding operating parameters to adjust.

**TABLE III**

| Performance Information | How to Record/Derive | Operating Parameter to Adjust |
|---|---|---|
| Instructions per Cycle (IPC) | Read Program Counter **(****FIG. 2A****,** part of SIMD Registers **142)** | Adjust instruction launch rate (probably w/Scheduling Queue **136**) |
| Frequency of issuing ALU Operations | Measure ALU cycles with counter during frame (GPU) | Don't allow ALU Operation every N cycles (need to do in HW) |
| Frequency of issuing Memory Operations | Measure Memory cycles with counter during frame (CPU and GPU) | Don't allow Memory Operation every N cycles (need to do in HW, e.g., w/Memory Controller **315**) |
| Average Wavefront Occupancy per unit time | Can sample this with a counter. (GPU) | Selectively Allocate GPRs **336** (could do in SW, e.g., adjust number of GPRs a shader uses) or Throttle wavefront launch rate (need to do in HW) |
| Average Wavefront Lifetime | Replay Capture and look at when wavefronts start and stop. (GPU) | Selectively Allocate GPRs (could do in SW) or Throttle wavefront launch rate (need to do in HW) |
| Pixels output to frame buffer per unit time | Look at pixel count per unit time w/existing counter. (GPU) | Throttle output rate (# pixels) from render backends (these write pixels out to frame buffer at the bottom of the graphics pipeline. (need to do in HW) |
| Average Memory operation latency | Determine when a memory instruction is issued and when it's executed and count clock cycles in between (CPU and GPU?) | Stall memory operations from finishing (need to do in HW) or run the clock at a different rate (can do in SW). |
| PC block residence | Read Program Counter (CPU and GPU?) | ??? - Might not be necessary to adjust but this may be useful information if operating parameter values are strongly correlated to block residence |

Note that it may not be possible for performance information recorded or derived when running the legacy application on the new device to meet or exceed corresponding performance information for running the legacy application on the legacy device. For example, average memory latency on a new device may be higher than the average memory latency measured on the legacy device, regardless of how the operating parameters are adjusted. Knowing this type of performance information for the new system may be useful when adjusting the operating parameters, but shouldn't be used when comparing the performance characteristics of an application running on a legacy and new device. Only key performance metrics like, but not limited to, frames per second (FPS) and instructions per cycle (IPC) should actually be used.

The process of adjusting the operating parameters when the application runs on a new device in order to meet the key performance metrics of the same application run on a legacy device may be understood from the following example involving video games. First, performance data is collected for a game running on the legacy device in order to determine its key performance metrics. Next the game is run on the new device while adjusting the operating parameters of the new device. Performance of the new device can be measured by collecting the same performance information on the new device as was done when the game ran on the legacy device and then comparing the key performance metrics of the game running on those two devices. While it may be desirable for the performance information for the new device to perfectly match the performance data from the legacy device, this may not be practically possible. It is sufficient for the performance information on the new device to match the performance information on the legacy device as closely as possible. However, it is unacceptable for key performance metrics on the new device to be worse than key performance metrics on the legacy device, as is an application or game that crashes (typically due to synchronization problems), or produces incorrect outputs (for the same reasons).

Now practically speaking, the first several times games are run on a new device the operating parameters will likely be set to be the same as on the legacy device. Once enough games have been run on the new device and their operating parameters have been tuned, that experience and data can be used to build a heuristic that can be used for additional games. The heuristic can be used to set the initial values of the operating parameters on the new device based upon the performance characteristics of the game. The game would then be run on the new device and the operating parameters may be modified to better match the key performance metrics. All performance data as measured on the new device can be used to help adjust the operating parameters, not just the key performance metrics. Any adjustments made to the operating parameters can also be used to further refine the heuristic.

## Claims

1. A method for optimizing performance of a new system to run a legacy application written for a legacy system, the new system having a computer architecture which is different to and newer than the computer architecture of the legacy system, the method comprising:
running (12) the legacy application on the legacy system;
collecting (16) performance information for the legacy application while running the legacy application on the legacy system;
running (32) the legacy application on the new system;
collecting (36) the same performance information for the legacy application while running the legacy application on the new system;
determining (18) performance characteristics for the legacy application running on the new system by analyzing the performance information, the performance characteristics including one or more key performance metrics and other performance information, wherein the one or more key performance metrics must be met when the legacy application is run on the new system and wherein the other performance information is useful for adjusting one or more operating parameters of the new system when running the legacy application on the new system; and
adjusting (40) the one or more operating parameters so that the one or more key performance metrics are met.

2. The method of claim 1, wherein adjusting the one or more operating parameters so that the one or more key performance metrics are met includes setting a number of general purpose registers, GPRs, on the new hardware to the same number as the legacy hardware.

3. The method of claim 1, wherein adjusting the one or more operating parameters so that the one or more key performance metrics are met includes using a legacy algorithm for certain operations of the new system.

4. The method of claim 1, wherein adjusting the one or more operating parameters so that the one or more key performance metrics are met includes disabling one or more features of the new hardware.

5. The method of claim **1,** wherein adjusting the one or more operating parameters so that the one or more key performance metrics are met includes adjusting execution of legacy application on the new system to match a latency on the new system to a corresponding latency for the legacy system.

6. The method of claim **1,** wherein adjusting the one or more operating parameters so that the one or more key performance metrics are met includes allocating more resources on the new system than on the legacy system.

7. The method of claim **1,** wherein adjusting the one or more operating parameters so that the one or more key performance metrics are met includes adjusting an instruction launch rate.

8. The method of claim **1,** wherein adjusting the one or more operating parameters so that the one or more key performance metrics are met includes not allowing arithmetic logic unit, ALU, operation every N cycles, where N is an integer greater than or equal to 1.

9. The method of claim 1, wherein adjusting the one or more operating parameters so that the one or more key performance metrics are met includes not allowing memory unit operation every N cycles, where N is an integer greater than or equal to 1.

10. The method of claim 1, wherein adjusting the one or more operating parameters so that the one or more key performance metrics are met includes throttling a parallel processing hardware scheduling unit launch rate.

11. The method of claim 1, wherein adjusting the one or more operating parameters so that the one or more key performance metrics are met includes throttling an output rate from one or more render backends that write pixels out to render targets at a bottom of a graphics pipeline.

12. The method of claim 1, wherein adjusting the one or more operating parameters so that the one or more key performance metrics are met includes stalling one or more memory operations from finishing.

13. The method of claim 1, wherein adjusting the one or more operating parameters so that the one or more key performance metrics are met includes running a clock on the new system at a different rate.

14. A system, comprising:
a processor (310);
a memory (340); and
processor executable instructions embodied in the memory, the instructions being configured to implement a method for optimizing performance of a new system to run a legacy application written for a legacy system, the new system having a computer architecture which is different to and newer than the computer architecture of the legacy system, the method comprising:
running the legacy application on the legacy system;
collecting performance information for the legacy application while running the legacy application on the legacy system;
running the legacy application on the new system;
collecting the same performance information for the legacy application while running the legacy application on the new system;
determining performance characteristics for the legacy application running on the new system by analyzing the performance information, the performance characteristics including one or more key performance metrics and other performance information, wherein the one or more key performance metrics must be met when the legacy application is run on the new system and wherein the other performance information is useful for adjusting one or more operating parameters of the new system when running the legacy application on the new system; and
adjusting the one or more operating parameters so that the one or more key performance metrics are met.

15. Computer software which, when executed by a computer, causes the computer to perform the method of any one of claims 1 to 13.

## Patentansprüche

1. Verfahren zum Optimieren einer Leistung eines neuen Systems, um eine Altanwendung ablaufen zu lassen, die für ein Altsystem geschrieben ist, wobei das neue System eine Computerarchitektur aufweist, die sich von der Computerarchitektur des Altsystems unterscheidet und neuer als diese ist, das Verfahren umfassend:
Ablaufenlassen (12) der Altanwendung auf dem Altsystem;
Sammeln (16) von Leistungsinformationen für die Altanwendung während des Ablaufenlassens der Altanwendung auf dem Altsystem;
Ablaufenlassen (32) der Altanwendung auf dem neuen System;
Sammeln (36) der gleichen Leistungsinformationen für die Altanwendung während des Ablaufenlassens der Altanwendung auf dem neuen System;
Bestimmen (18) von Leistungsmerkmalen für die Altanwendung, die auf dem neuen System abläuft, durch ein Analysieren der Leistungsinformationen, wobei die Leistungsmerkmale eine oder mehrere Schlüsselleistungskennzahlen und andere Leistungsinformationen einschließen, wobei die eine oder die mehreren Schlüsselleistungskennzahlen erfüllt werden müssen, wenn die Altanwendung auf dem neuen System ablaufen gelassen wird, und wobei die anderen Leistungsinformationen zum Anpassen eines oder mehrerer Betriebsparameter des neuen Systems nützlich sind, wenn die Altanwendung auf dem neuen System ablaufen gelassen wird; und
Anpassen (40) des einen oder der mehreren Betriebsparameter, sodass die eine oder die mehreren Schlüsselleistungskennzahlen erfüllt werden.

2. Verfahren nach Anspruch 1, wobei das Anpassen des einen oder der mehreren Betriebsparameter, sodass die eine oder die mehreren Schlüsselleistungskennzahlen erfüllt werden, ein Einstellen einer Anzahl von Mehrzweckregistern, GPRs, auf der neuen Hardware auf die gleiche Anzahl wie bei der Alt-Hardware einschließt.

3. Verfahren nach Anspruch 1, wobei das Anpassen des einen oder der mehreren Betriebsparameter, sodass die eine oder die mehreren Schlüsselleistungskennzahlen erfüllt werden, ein Verwenden eines Altalgorithmus für gewisse Betriebe des neuen Systems einschließt.

4. Verfahren nach Anspruch 1, wobei das Anpassen des einen oder der mehreren Betriebsparameter, sodass die eine oder die mehreren Schlüsselleistungskennzahlen erfüllt werden, ein Deaktivieren einer oder mehrerer Funktionen der neuen Hardware einschließt.

5. Verfahren nach Anspruch 1, wobei das Anpassen des einen oder der mehreren Betriebsparameter, sodass die eine oder die mehreren Schlüsselleistungskennzahlen erfüllt werden, das Anpassen einer Ausführung der Altanwendung auf dem neuen System einschließt, um eine Latenz auf dem neuen System an eine entsprechende Latenz für das Altsystem anzugleichen.

6. Verfahren nach Anspruch 1, wobei das Anpassen des einen oder der mehreren Betriebsparameter, sodass die eine oder die mehreren Schlüsselleistungskennzahlen erfüllt werden, ein Zuweisen von mehr Ressourcen auf dem neuen System als auf dem Altsystem einschließt.

7. Verfahren nach Anspruch 1, wobei das Anpassen des einen oder der mehreren Betriebsparameter, sodass die eine oder die mehreren Schlüsselleistungskennzahlen erfüllt werden, das Anpassen einer Anweisungsstartrate einschließt.

8. Verfahren nach Anspruch 1, wobei das Anpassen des einen oder der mehreren Betriebsparameter, sodass die eine oder die mehreren Schlüsselleistungskennzahlen erfüllt werden, ein Nichtzulassen des Betriebs einer arithmetisch-logischen Einheit, ALU, alle N Zyklen einschließt, wobei N eine ganze Zahl größer als oder gleich 1 ist.

9. Verfahren nach Anspruch 1, wobei das Anpassen des einen oder der mehreren Betriebsparameter, sodass die eine oder die mehreren Schlüsselleistungskennzahlen erfüllt werden, das Nichtzulassen des Betriebs einer Speichereinheit alle N Zyklen einschließt, wobei N eine ganze Zahl größer als oder gleich 1 ist.

10. Verfahren nach Anspruch 1, wobei das Anpassen des einen oder der mehreren Betriebsparameter, sodass die eine oder die mehreren Schlüsselleistungskennzahlen erfüllt werden, ein Drosseln einer Startrate einer Parallelverarbeitungs-Hardware-Planungseinheit einschließt.

11. Verfahren nach Anspruch 1, wobei das Anpassen des einen oder der mehreren Betriebsparameter, sodass die eine oder die mehreren Schlüsselleistungskennzahlen erfüllt werden, das Drosseln einer Ausgaberate von einem oder mehreren Render-Backends einschließt, die ausgehende Pixel zu Render-Zielen an einem unteren Ende einer Grafikpipeline schreiben.

12. Verfahren nach Anspruch 1, wobei das Anpassen des einen oder der mehreren Betriebsparameter, sodass die eine oder die mehreren Schlüsselleistungskennzahlen erfüllt werden, ein Verzögern eines Abschließens eines oder mehrerer Speicherbetriebe einschließt.

13. Verfahren nach Anspruch 1, wobei das Anpassen des einen oder der mehreren Betriebsparameter, sodass die eine oder die mehreren Schlüsselleistungskennzahlen erfüllt werden, das Ablaufenlassen eines Taktes auf dem neuen System mit einer unterschiedlichen Rate einschließt.

14. System, umfassend:
einen Prozessor (310);
einen Speicher (340); und
prozessorausführbare Anweisungen, die in dem Speicher verkörpert sind, wobei die Anweisungen konfiguriert sind, um ein Verfahren zum Optimieren der Leistung eines neuen Systems zu implementieren, um eine Altanwendung ablaufen zu lassen, die für ein Altsystem geschrieben ist, wobei das neue System eine Computerarchitektur aufweist, die sich von der Computerarchitektur des Altsystems unterscheidet und neuer als diese ist, das Verfahren umfassend:
Ablaufenlassen der Altanwendung auf dem Altsystem;
Sammeln von Leistungsinformationen für die Altanwendung während des Ablaufenlassens der Altanwendung auf dem Altsystem;
Ablaufenlassen der Altanwendung auf dem neuen System;
Sammeln der gleichen Leistungsinformationen für die Altanwendung während des Ablaufenlassens der Altanwendung auf dem neuen System;
Bestimmen von Leistungsmerkmalen für die Altanwendung, die auf dem neuen System abläuft, durch das Analysieren der Leistungsinformationen, wobei die Leistungsmerkmale eine oder mehrere Schlüsselleistungskennzahlen und andere Leistungsinformationen einschließen, wobei die eine oder die mehreren Schlüsselleistungskennzahlen erfüllt werden müssen, wenn die Altanwendung auf dem neuen System ablaufen gelassen wird, und wobei die anderen Leistungsinformationen zum Anpassen eines oder mehrerer Betriebsparameter des neuen Systems nützlich sind, wenn die Altanwendung auf dem neuen System ablaufen gelassen wird; und
Anpassen des einen oder der mehreren Betriebsparameter, sodass die eine oder die mehreren Schlüsselleistungskennzahlen erfüllt werden.

15. Computersoftware, die, wenn sie durch einen Computer ausgeführt wird, den Computer veranlasst, das Verfahren nach einem der Ansprüche 1 bis 13 durchzuführen.

## Revendications

1. Procédé permettant d'optimiser une performance d'un nouveau système pour exécuter une application héritée écrite pour un système hérité, le nouveau système présentant une architecture informatique différente de l'architecture informatique du système hérité et plus récente que celle-ci, le procédé comprenant :
l'exécution (12) de l'application héritée sur le système hérité ;
la collecte (16) d'informations de performance pour l'application héritée lors de l'exécution de l'application héritée sur le système hérité ;
l'exécution (32) de l'application héritée sur le nouveau système ;
la collecte (36) des mêmes informations de performance pour l'application héritée lors de l'exécution de l'application héritée sur le nouveau système ;
la détermination (18) de caractéristiques de performance pour l'application héritée s'exécutant sur le nouveau système en analysant les informations de performance, les caractéristiques de performance comportant une ou plusieurs mesures de performance clés et d'autres informations de performance, dans lequel la ou les mesures de performance clés doivent être satisfaites lorsque l'application héritée est exécutée sur le nouveau système et dans lequel les autres informations de performance sont utiles pour ajuster un ou plusieurs paramètres de fonctionnement du nouveau système lors de l'exécution de l'application héritée sur le nouveau système ; et
l'ajustement (40) du ou des paramètres de fonctionnement de sorte que la ou les mesures de performance clés sont satisfaites.

2. Procédé selon la revendication 1, dans lequel l'ajustement du ou des paramètres de fonctionnement de sorte que la ou les mesures de performance clés sont satisfaites comporte le réglage d'un nombre de registres à usage général, GPR, sur le nouveau matériel sur le même nombre que le matériel hérité.

3. Procédé selon la revendication 1, dans lequel l'ajustement du ou des paramètres de fonctionnement de sorte que la ou les mesures de performance clés sont satisfaites comporte l'utilisation d'un algorithme hérité pour certaines opérations du nouveau système.

4. Procédé selon la revendication 1, dans lequel l'ajustement du ou des paramètres de fonctionnement de sorte que la ou les mesures de performance clés sont satisfaites comporte la désactivation d'une ou de plusieurs caractéristiques du nouveau matériel.

5. Procédé selon la revendication 1, dans lequel l'ajustement du ou des paramètres de fonctionnement de sorte que la ou les mesures de performance clés sont satisfaites comporte l'ajustement de l'exécution d'une application héritée sur le nouveau système pour faire correspondre une latence sur le nouveau système à une latence correspondante pour le système hérité.

6. Procédé selon la revendication 1, dans lequel l'ajustement du ou des paramètres de fonctionnement de sorte que la ou les mesures de performance clés sont satisfaites comporte l'allocation de plus de ressources sur le nouveau système que sur le système hérité.

7. Procédé selon la revendication 1, dans lequel l'ajustement du ou des paramètres de fonctionnement de sorte que la ou les mesures de performance clés sont satisfaites comporte l'ajustement d'une vitesse de lancement d'instruction.

8. Procédé selon la revendication 1, dans lequel l'ajustement du ou des paramètres de fonctionnement de sorte que la ou les mesures de performance clés sont satisfaites comporte la non-autorisation de fonctionnement d'unité arithmétique et logique, ALU, tous les N cycles, où N est un nombre entier supérieur ou égal à 1.

9. Procédé selon la revendication 1, dans lequel l'ajustement du ou des paramètres de fonctionnement de sorte que la ou les mesures de performance clés sont satisfaites comporte la non-autorisation de fonctionnement de l'unité de mémoire tous les N cycles, où N est un nombre entier supérieur ou égal à 1.

10. Procédé selon la revendication 1, dans lequel l'ajustement du ou des paramètres de fonctionnement de sorte que la ou les mesures de performance clés sont satisfaites comporte la limitation d'une vitesse de lancement d'unité de planification de matériel de traitement parallèle.

11. Procédé selon la revendication 1, dans lequel l'ajustement du ou des paramètres de fonctionnement de sorte que la ou les mesures de performance clés sont satisfaites comporte la limitation d'une vitesse de sortie à partir d'un ou de plusieurs programmes dorsaux de rendu qui écrivent des pixels vers des cibles de rendu au niveau inférieur d'un pipeline graphique.

12. Procédé selon la revendication 1, dans lequel l'ajustement du ou des paramètres de fonctionnement de sorte que la ou les mesures de performance clés sont satisfaites comporte le blocage d'une ou de plusieurs opérations de mémoire jusqu'à la fin.

13. Procédé selon la revendication 1, dans lequel l'ajustement du ou des paramètres de fonctionnement de sorte que la ou les mesures de performance clés sont satisfaites comporte l'exécution d'une horloge sur le nouveau système à une vitesse différente.

14. Système, comprenant :
un processeur (310) ;
une mémoire (340) ; et
des instructions exécutables par processeur incorporées dans la mémoire, les instructions étant configurées pour mettre en œuvre un procédé permettant d'optimiser une performance d'un nouveau système pour exécuter une application héritée écrite pour un système hérité, le nouveau système présentant une architecture informatique différente de l'architecture informatique du système hérité et plus récente que celle-ci, le procédé comprenant :
l'exécution de l'application héritée sur le système hérité ;
la collecte d'informations de performance de l'application héritée lors de l'exécution de l'application héritée sur le système hérité ;
l'exécution de l'application héritée sur le nouveau système ;
la collecte des mêmes informations de performance pour l'application héritée lors de l'exécution de l'application héritée sur le nouveau système ;
la détermination des caractéristiques de performance de l'application héritée s'exécutant sur le nouveau système en analysant les informations de performance, les caractéristiques de performance comportant une ou plusieurs mesures de performance clés et d'autres informations de performance, dans lequel la ou les mesures de performance clés doivent être satisfaites lorsque l'application héritée est exécutée sur le nouveau système et dans lequel les autres informations de performance sont utiles pour ajuster un ou plusieurs paramètres de fonctionnement du nouveau système lors de l'exécution de l'application héritée sur le nouveau système ; et
l'ajustement du ou des paramètres de fonctionnement de sorte que la ou les mesures de performance clés sont satisfaites.

15. Logiciel informatique qui, lorsqu'il est exécuté par un ordinateur, amène l'ordinateur à réaliser le procédé selon l'une quelconque des revendications 1 à 13.
